# EUROPÄISCHE PATENTSCHRIFT

(11) **EP 0 963 496 B1**
(45) Veröffentlichungstag und Bekanntmachung des Hinweises auf die Patenterteilung: **25.06.2003**
(21) Anmeldenummer: 98908054.4
(22) Anmeldetag: 04.02.1998
(51) Int. Cl.: E04F 13/08, F16B 21/07

(54) **FASSADEN-BEFESTIGUNGSVORRICHTUNG**
FACADE FIXING DEVICE
DISPOSITIF DE FIXATION DE FACADES

(30) Priorität: 13.02.1997 DE 19705413; 18.02.1997 DE 19706217; 27.08.1997 DE 19737262
(43) Veröffentlichungstag der Anmeldung: 15.12.1999
(73) Patentinhaber: Gortat, Manfred, Dipl.-Ing., 44892 Bochum (DE)
(72) Erfinder: Gortat, Manfred, Dipl.-Ing., 44892 Bochum (DE)
(74) Vertreter: Patentanwälte Wenzel & Kalkoff
(86) Internationale Anmeldenummer: EP9800597
(87) Internationale Veröffentlichungsnummer: WO98036140

(56) Entgegenhaltungen:
- EP-A- 0 638 700
- DE-A- 3 319 805
- DE-A- 3 841 179
- US-A- 3 640 033
- US-A- 4 520 607

## Beschreibung

Die Erfindung bezieht sich auf eine Fassaden-Befestigungsvorrichcung und ein Verfahren zum Befestigen eines Fassadenelementes in einem Abstand an einer Basis, insbesondere einer Außenwand eines Bauwerks, mit einem Aufnahmeelement zur Befestigung des Fassadenelementes und einer mit der Basis verbundenen Stützeinrichtung zur Befestigung des Aufnahmeelementes.

Fassaden-Befestigungsvorrichtungen dienen beispielsweise dazu, an Fabrikhallen oder wärmespeichernden Kesseln Fassadenelemente anzubringen. Solche Fassaden-Befestigungsvorrichtungen müssen gewährleisten, daß zwischen einem Fassadenelement und einer Außenwand eines solchen Bauwerks ein Zwischenraum gebildet wird, der dazu dienen kann, wärmeisolierende oder schwingungsdämpfende Materialien aufzunehmen.

Eine bekannte Fassaden-Befestigungsvorrichtung weist einen sog. Omega-Bügel als Aufnahmeelement auf, an dem die Fassadenelemente angeschraubt werden und der über eine Stützeinrichtung an der Außenwand eines Bauwerks befestigt ist. Im einzelnen hat der Omega-Bügel die Form des großen griechischen Buchstabens Omega, und ein Fassadenelement wird an den beiden Endabschnitten des derart geformten Bügels angeschraubt. Der von dem Fassadenelement entfernte Abschnitt des Omega-Bügels ist abgeflacht ausgebildet und mit einem Abstandshalter verschraubt, der die Stützeinrichtung bildet und an einer Außenwand eines Bauwerks angeschraubt ist.

Die bei solchen bekannten Fassaden-Befestigungsvorrichtungen eingesetzten Omega-Bügel haben den Nachteil, daß sie zuerst mit zwei Schrauben an dem Abstandselement in einer genau definierten Lage angebracht werden müssen. Erst danach werden die Fassadenelemente an diesen Omega-Bügel angeschraubt. Da diese Omega-Bügel zur Schwingungsdämpfung aus Federstahl hergestellt sind, haben sie den weiteren Nachteil, daß sich ihre Belastbarkeit nicht präzise genug berechnen läßt, so daß grundsätzlich zur Befestigung eines Fassadenelementes immer mehr Omega-Bügel eingesetzt werden als erforderlich, um Sicherheitsbedenken zu begegnen.

In der DE-A-3841179 ist eine Befestigungsvorrichtung für plattenförmige Wand- oder Deckenelemente beschrieben. Ein C-Profil als Trägerschiene ist mit einer Schraube als Befestigungsmittel an eine Basis, d.h. einer Wand oder Decke befestigt. Ein Befestigungsclip ist in die Trägerschiene einsetzbar. Der Befestigungsclip verrastet mit einem am Fassadenelement befestigten Anker.

Ausgehend hiervon liegt der Erfindung die Aufgabe zugrunde, eine Fassaden-Befestigungsvorrichtung und ein Verfahren zur Befestigung eines Fassadenelementes zu schaffen, die eine im Vergleich zum Stand der Technik vereinfachte Montage von Fassadenelementen gestattet.

Diese Aufgabe wird gelöst durch eine Vorrichtung nach Anspruch 1 und durch ein Verfahren nach Anspruch 14.

Da das Befestigungselement in eine langgestreckte Öffnung des Aufnahmeelementes eingreift, wird gewährleistet, daß noch im montierten Zustand der Befestigungsvorrichtung eine Relativbewegung des Aufnahmeelementes für das Fassadenelement gegenüber der Stützeinrichtung möglich ist. Daher ist es gegenüber dem Stand der Technik nicht mehr erforderlich, in einem ersten Montageschritt die Stützeinrichtung in einer genau definierten Lage anzubringen, denn das Aufnahmeelement bzw. das daran angebrachte Fassadenelement läßt sich selbst im montierten Zustand noch relativ zu der Stützeinrichtung bewegen. Weiterhin gewährleistet diese Verschiebemöglichkeit, daß die Befestigung des Fassadenelementes auch bei verschiedenen Wärmeausdehnungen des Fassadenelementes und des Aufnahmelelementes nicht gelöst wird.

Ein Vorteil der erfindungsgemäßen Fassaden-Befestigungsvorrichtung besteht darin, daß durch das Vorsehen einer von außen zugänglichen Federeinrichtung zum Eingriff mit dem Tragelement der Montagevorgang insgesamt vereinfacht wird, da die bei dem Einsatz des Omega-Bügels als Aufnahmeelement erforderliche Schraubverbindung durch eine wesentlich schneller durchzuführende federnde Verbindung zwischen dem Befestigungselement und dem Tragelement ersetzt wird.

Bevorzugt weist die Federeinrichtung mindestens ein Paar von im Abstand voneinander angeordneten Federelementen auf, und zweckmäßig ist ein Ende des Tragelementes als Anker ausgebildet, dessen Schaft zwischen den Federelementen festklemmbar ist.

In diesem Falle läßt sich das als Anker ausgebildete Ende des Tragelementes durch Drücken zwischen den Federelementen hindurchschieben, wobei Flunken des ankerförmig ausgebildeten Endes die Federelemente auseinanderdrücken bzw. aufspreizen. Sobald dieses Ende des Tragelementes soweit durch die Federeinrichtung hindurchgeschoben ist, daß der Schaft des ankerförmigen Endes mit den Federelementen in Berührung kommt, wird dieser Schaft zwischen den Federelementen festgeklemmt. Dadurch wird eine zuverlässige und leicht herstellbare Verbindung zwichen dem Befestigungselement und dem Tragelement geschaffen.

Vorteilhafterweise ist die Federeinrichtung in einen schlitzförmigen Hohlraum des Befestigungselementes eingeschoben und mit dem Befestigungselement verrastet. Dies gewährleistet eine platzsparende und einfache Unterbringung der Federeinrichtung.

Bevorzugt ist das Aufnahmeelement als C-Profil ausgebildet und bildet die Öffnung des C-Profils die langgestreckte Öffnung.

Bei der Ausbildung des Aufnahmeelementes als C-Profil ist es besonders vorteilhaft, daß die Federeinrichtung im wesentlichen in einer Ebene parallel zur Öffnungsebene, senkrecht zur Längsachse der Öffnung und im Inneren des C-Profils angeordnet ist. Beispielsweise kann die Abmessung der Federeinrichtung senkrecht zur Längsachse der Öffnung so vorgesehen sein, daß sie größer als eine Breite der Öffnung des C-Profils ist.

Bei dieser Ausführungsform wird für den Fall, daß das Befestigungselement mit Ausnahme der üblicherweise aus Metall hergestellten Federeinrichtung aus Kunststoff hergestellt ist, gewährleistet, daß bei einem Wegschmelzen des Kunststoffes infolge hoher Hitzeeinwirkung, wie im Falle eines Brandes, die Federeinrichtung durch ihren Eingriff in das C-Profil ein Ablösen des C-Profils verhindern kann.

Es ist von Vorteil, wenn das Befestigungselement der Stützeinrichtung am freien Ende der Stützeinrichtung angeordnet und derart ausgebildet ist, daß es zur Einnahme einer ersten relativen Lage zum Aufnahmeelement in dessen Öffnung einschiebbar ist und ausgehend von der ersten relativen Lage in eine zweite relative Lage zum Aufnahmeelement so bewegbar ist, daß es mit dem Aufnahmeelement in eine Verriegelungsposition kommt. Dazu hat das Befestigungselement einen Abschnitt, dessen Querschnitt im wesentlichen in Form einer Ellipse ausgebildet ist, deren kleinere Halbachse kleiner und deren größere Halbachse größer als die halbe Breite der Öffnung des Aufnahmeelementes ist.

Bei dieser Ausführungsform wird die erste relative Lage zum Aufnahmeelement dadurch bestimmt, daß die kleinere Halbachse des elliptischen Abschnitts parallel zu einer Querachse der langgestreckten Öffnung des Aufnahmeelementes ausgerichtet wird. Dann läßt sich das Befestigungselement in die Öffnung einschieben. Die zweite Lage wird durch Drehen des Befestigungselementes bis zur Einnahme einer Verriegelungsposition erreicht.

Zur Verriegelung des Befestigungselementes mit dem Aufnahmeelement können die entsprechenden Teile des Befestigungselementes zum Beispiel aus kompressiblem Material hergestellt sein, was auch für eine Schwingungsdämpfung sorgt, oder Nuten aufweisen. Es ist ebenfalls möglich, daß die Teile des Befestigungselementes formstabil, jedoch damit in Eingriff kommende Abschnitte des Aufnahmeelementes aus kompressiblem Material hergestellt sind.

Vorteilhafterweise ist das Befestigungselement aus hitzebeständigem Kunststoff als Grundmaterial hergestellt.

Auf diese Weise wird infolge der geringen Wärmeleitfähigkeit von Kunststoff eine Wärmeisolierung eines Fassadenelementes gegenüber der Außenwand beispielsweise eines Wärmekessels erreicht.

Weiterhin kann das Befestigungselement der Stützeinrichtung auch schwingungsdämpfend ausgebildet sein. In begrenztem Umfang wird eine Schwingungsdämpfung bereits durch die Federeinrichtung erreicht, die bei der Befestigung des Befestigungselementes an dem Tragelement zum Einsatz kommt. Für eine Schwingungsdämpfung sind in irgendeiner Weise federnde Bauteile denkbar, die beispielsweise zwischen einem starren, mit dem Aufnahmeelement in Eingriff kommenden Teil des Befestigungselementes und der aus Festigkeitsgründen auch eher starren Federeinrichtung angeordnet sind. Bevorzugt sind jedoch mit dem Aufnahmeelement in Eingriff kommende Teile des Befestigungselementes jeweils aus Metallgestrick-Kissen gebildet. Es kann aber auch das gesamte Befestigungselement aus Metallgestrick gebildet sein.

Ebenfalls Gegenstand der Erfindung ist ein Verfahren zur Befestigung eines Fassadenelementes in einem Abstand an einer Basis, umfassend die Schritte:
a) Befestigen eines Tragelementes einer Stützeinrichtung an der Basis;
b) Positionieren eines Aufnahmeelementes mit einer langgestreckten Öffnung relativ zu der Stützeinrichtung, so daß ein zum Eingriff mit dem Aufnahmeelement mittels der Öffnung ausgebildetes Befestigungselement der Stützeinrichtung in die Öffnung des Aufnahmelementes einschiebbar ist;
c) Einschieben des Befestigungselementes in die Öffnung des Aufnahmeelementes;
d) Bewegen des Befestigungselementes, so daß das Befestigungselement mit dem Aufnahmeelement in eine Verriegelungsposition kommt;
e) Befestigen des Befestigungselementes an dem Tragelement; und
f) Befestigen des Fassadenelementes an dem Aufnahmeelement.

Bevorzugt umfaßt der Schritt e) ein Einklemmen eines Schaftes eines ankerförmigen Endes des Tragelementes zwischen Federelemente des Befestigungselementes.

Vorteilhafterweise umfaßt der Schritt b) ein Verdrehen des Befestigungselementes um eine Achse senkrecht zur Ebene der Öffnung, so daß das Befestigungselement mit dem Aufnahmeelement in eine Verriegelungsposition kommt.

Die Erfindung wird anhand nachfolgender Beschreibung bevorzugter Ausführungsbeispiele unter Bezugnahme auf die beigefügten Zeichnungen noch weiter erläutert. Es zeigen
- Fig. 1: ein Befestigungselement einer bevorzugten Ausführungsform der erfindungsgemäßen Fassaden-Befestigungsvorrichtung;
- Fig. 2: eine Schnittdarstellung einer bevorzugten Ausführungsform der erfindungsgemäßen Fassaden-Befestigungsvorrichtung;
- Fig. 3: einen Schnitt nach Linie A-A in Fig. 2 mit entspannter Federeinrichtung nach der Erfindung;
- Fig. 4a und 4b: jeweils einen Schnitt nach Linie A-A in Fig. 2 mit entspannter Federeinrichtung in einer Einschiebeposition bzw. einer Verriegelungsposition eines Befestigungselementes nach der Erfindung;

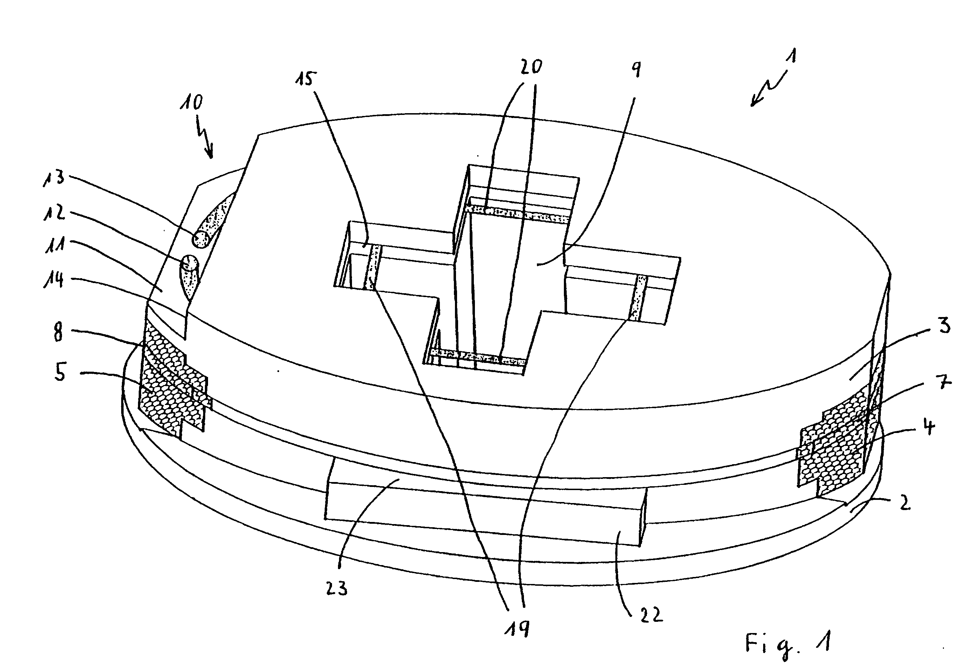

Fig. 1 zeigt ein Befestigungselement 1, das bei einer bevorzugten Ausführungsform der Fassaden-Befestigungsvorrichtung eingesetzt wird. Das Befestigungselement 1 ist im wesentlichen in zwei axiale Abschnitte aufgeteilt, nämlich einen ersten Abschnitt 2 mit im wesentlichen kreisförmigem Querschnitt und einem zweiten Abschnitt 3 mit elliptischem Querschnitt. Der Abschnitt mit elliptischem Querschnitt 3 hat außen, in dem Bereich mit kleinstem Krümmungsradius des elliptischen Abschnitts 3 liegende Teile 4, 5, die, wie später im Detail beschrieben wird, zur Verriegelung des Befestigungselementes 1 mit einem Aufnahmeelement 6 vorgesehen sind.

Im in Fig. 1 dargestellten Ausführungsbeispiel sind die Teile 4, 5 als Metallgestrick-Kissen mit jeweils einer Nut 7 bzw. 8 ausgebildet.

Außerdem weist das Befestigungselement 1 eine mittig angeordnete Durchgangsöffnung 9 auf, die kreuzförmig ausgebildet ist.

In einem Bereich des elliptischen Abschnitts 3, der sich an den Teil 4 axial anschließt, ist ein Stufe 10 vorgesehen, an deren senkrecht zur Öffnung 9 verlaufender Seite 11 zwei Bohrungen 12, 13 angeordnet sind. Von der senkrecht zur Seite 11 verlaufenden Seite 14 der Stufe 10 geht ein schlitzförmiger Hohlraum 15 aus, der sich senkrecht zur Öffnung 9 im elliptischen Abschnitt 3 erstreckt.

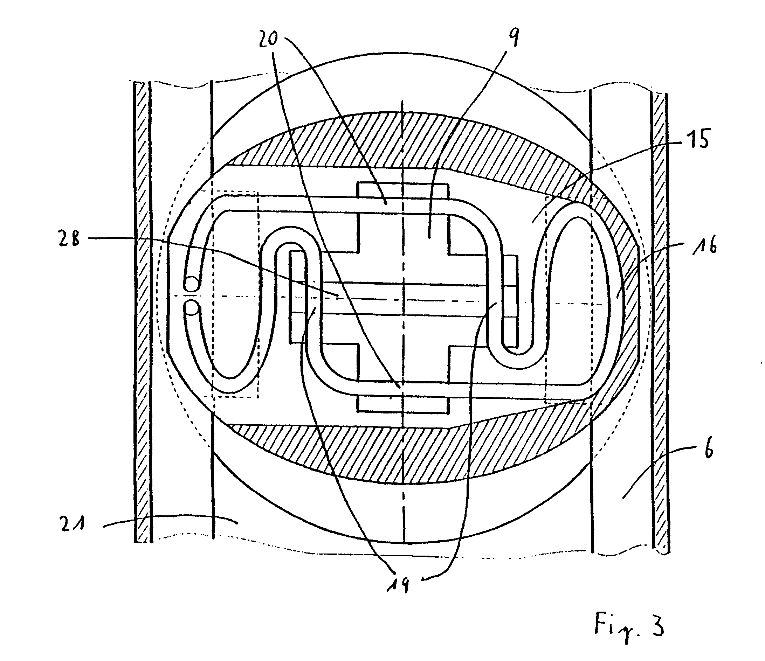

Der Hohlraum 15 dient zur Aufnahme einer Federeinrichtung 16, deren Form in Fig. 3 dargestellt ist.

Wie in Fig. 3 gezeigt, ist die Federeinrichtung 16 einteilig aus einem Drahtstück gebildet, das im wesentlichen in einer Ebene senkrecht zur Öffnung 9 angeordnet ist. Lediglich die Enden, des Drahtstückes sind derart umgebogen, daß sie senkrecht zur Zeichnungsebene von Fig. 3 zeigen.

Die Federeinrichtung 16 kann über die Seite 14 der Stufe 10 in den Hohlraum 15 eingeschoben werden. Bei Erreichen der Endposition der Federeinrichtung 16 rasten die Enden, der Federeinrichtung 16 in die Bohrungen 12, 13 ein, so daß die Federeinrichtung 16 gegenüber einem Herausfallen aus dem Hohlraum 15 gesichert ist.

Wie in Fig. 1 dargestellt ist, sind zwei jeweils parallel verlaufende Federelementpaare 19, 20 über die Öffnung 9 des Befescigungselementes 1 von außen zugänglich. Wie auch in Fig. 3 zu sehen ist, bilden die Federelementpaare 19, 20 im vorliegenden Ausführungsbeispiel ein Quadrat, dessen Ecken, wie in Fig. 1 dargestellt ist, außerhalb der Öffnung 9 in dem Hohlraum 15 liegen. Zur Abstützung der Federeinrichtung 16 ist eine Breite des Hohlraumes 15 so bemessen, daß sich die Federeinrichtung 16 gerade in den Hohlraum 15 einschieben läßt.

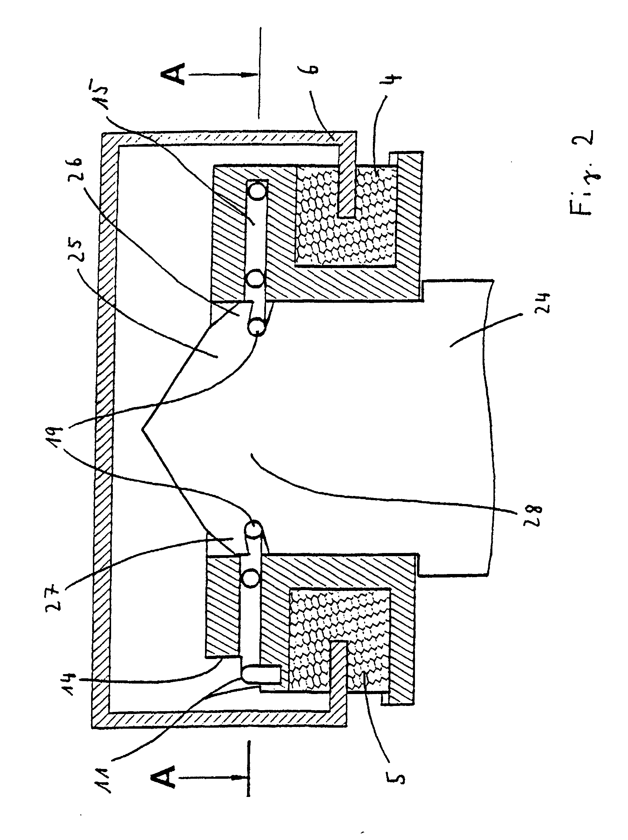

In Fig. 2 ist eine bevorzugte Ausführungsform der Fassaden-Befestigungsvorrichtung in einer Schnittansicht dargestellt. Fig. 2 zeigt das Aufnahmeelement 6, das eine langgestreckte Öffnung 21 hat, die senkrecht zur Zeichnungsebene von Fig. 2 verläuft. Die Breite des Aufnahmeelementes 6 ist so bemessen, daß sich der elliptische Abschnitt 3 des Befestigungselementes 1 in die Öffnung 21 des Aufnahmeelementes 6 einschieben läßt, wenn die Metallgestrick-Kissen 4, 5 des Abschnitts 3 in Längsrichtung der Öffnung 21 ausgerichtet sind. Anschläge des Befestigungselementes 1, von denen einer 22 in Fig. 1 dargestellt ist und deren Anschlagfläche 23 in der Ebene der näher an dem ersten Abschnitt 2 des Befestigungselementes 1 angeordneten Nuten-wandungen liegen, sind beim Einschieben des Befestigungselementes 1 in die Öffnung 21 des Aufnahmeelementes 6 in Querrichtung der Öffnung 21 angeordnet. Der Einschiebevorgang ist beendet, wenn die Anschläge mit dem Aufnahmeelement 6 in Berührung kommen. Durch anschließendes Drehen des Befestigungselementes um 90° nimmt dieses eine Verriegelungsposition ein, bei der die Nuten 7, 8 der Metallgestrick-Kissen 4, 5 mit der Öffnung 21 des Aufnahmeelementes 6 in Eingriff gelangen. Die Nuten 7, 8 haben jeweils einen im wesentlich gleichbleibenden Querschnitt, d. h. verlaufen nicht auf einem Kreisbogen mit einem Durchmesser gleich der Breite der Öffnung 21, so daß bei Erreichen der Verriegelungsposition ein Einschnappen des Befestigungselementes 1 in die Öffnung 21 des Aufnahmeelementes 6 erfolgt. Es wird dabei jeweils ein Ende der Nuten 7, 8 zum Erreichen der Verriegelungsposition kurz zusammengedrückt und wieder entspannt. In dieser Weise ist eine sichere Befestigung des Befestigungselementes 1 an dem Aufnahmeelement 6 gewährleistet.

In der Schnittansicht von Fig. 2 ist ebenfalls eines 19 der Federelementenpaare 19, 20 dargestellt. Dieses Federelementenpaar 19 klemmt ein Tragelement 24 in Form eines flachen Metallstücks ein. Ein in Fig. 2 nicht dargestelltes Ende des Tragelementes 24 ist an einer Basis, beispielsweise der Wand eines Bauwerks, angebracht. Das andere Ende 25 ist als Anker ausgebildet, hinter dessen Flunken 25, 27 das Federelementenpaar 19 greift.

Das Tragelement 24 läßt sich wie folgt an der Federeinrichtung 16 anbringen. Das ins Innere des Aufnahmeelementes 6 weisende Ende 25 des Tragelementes 24 wird von außerhalb des Aufnahmeelementes 6 gegen die Federeinrichtung 16 gedrückt, wobei das Federelementenpaar 19 zunächst auseinandergedrückt bzw. gespreizt wird. Sobald das Tragelement 24 so weit hineingedrückt ist, daß das Federelementenpaar 19 von den Flunken 26, 27 aus in Richtung auf einen Schaft 28 des ankerförmigen Endes 25 zurückspringt, wird dieser Schaft 28 von dem Federelementenpaar 19 festgeklemmt, so daß das Tragelement 24 lagefixiert wird, also eingeschnappt ist. In dem Moment, wenn das Federelementenpaar 19 nach innen springt vollzieht das Tragelement 24 in geringem Maße eine Bewegung aus dem Aufnahmeelement 6 heraus, da die Flunken 26, 27 mit dem Schaft 28 teilweise überlappen und der Schaft 28 derart abgeschrägt ist, daß das Federelementenpaar 19 aufgrund der Federkraft der Federeinrichtung 16 nach dem Auftreffen auf den Schaft 28 zum Erreichen eines minimalen Abstands zwischen den Federelementen des Paares 19 das Tragelement 24 geringfügig aus der Öffnung des Aufnahmeelementes 6 herausdrückt. In dieser Weise wird eine besonders sichere Verbindung zwischen dem Tragelement 24 und der Federeinrichtung 16 des Befestigungselementes 1 erreicht.

Im in Fig. 2 dargestellten Ausführungsbeispiel ist das Aufnahmeelement 6 als C-Profil ausgebildet. Das Befestigungselement 1 ist in dem Fall, wenn das Aufnahmeelement 6 gegenüber dem Tragelement 24 wärmeentkoppelt werden soll, aus Kunststoff, beispielsweise dem hitzebeständigen Polyamid 4.6 hergestellt. Wenn bei einem Einsatz der Befestigungsvorrichtung beispielsweise an einem Wärmekessel am Befestigungselement 1 eine Temperatur erreicht wird, bei der der verwendete Kunststoff schmilzt, besteht grundsätzlich die Gefahr, daß die tragende Verbindung zwischen dem Aufnahmeelement 6 und dem Tragelement 24 zerstört wird, da nur noch die metallischen Teile, C-Profil 6, Federeinrichtung 16 und Trageelement 24 formbeständig sind.

Für diesen Fall wird vorgesehen, daß ein Fassadenelement (nicht dargestellt) an einer der Öffnung 21 des C-Profils gegenüberliegenden Seite befestigt, beispielsweise angeschraubt, ist. Das C-Profil 6 erstreckt sich dann parallel zum Erdboden, während sowohl das Federelement 16 als auch das flache Tragelement 24 sich gegenüber dem Erdboden in einer aufrechten Position befinden. Die Federeinrichtung 16 erstreckt sich dann so weit in Querrichtung der Öffnung 21 des C-Profiles 6, das selbst bei weggeschmolzenem Kunststoff die Federeinrichtung 16, die mit dem Tragelement 24 im Eingriff steht, bei einer Schwenkbewegung des C-Profiles 6 in der Ebene des flachen Tragelementes 24 das Innere des C-Profiles 6 nicht verlassen kann. D. h., daß die Federeinrichtung 16 in ihrer Länge die Breite der Öffnung 21 in einem geeigneten Maße überschreitet.

Abweichend von der in Fig. 2 dargestellten Ausführungsform der Fassaden-Befestigungsvorrichtung kann das Tragelement 24 auch mit dem Federelementenpaar 20 festgeklemmt werden, das zu dem Federelementenpaar 19 senkrecht steht. Das flache Tragelement 24 kann dann in einer Ebene parallel zum Erdboden angeordnet sein, so daß es zur Abstützung von Mineralwollmatten und ähnlichem als Isolierstoffe zwischen einem Wärmekessel und einem Fassadenelement eingesetzt werden kann. In diesem Fall liegen solche Matten auf einer flachen Seite des Trageelementes 24 auf.

Statt der Metallgestrick-Kissen zur Ausbildung der Teile 4 und 5 des Befestigungselementes 1 kann auch ein kompressibles Elastomer-Material verwendet werden, das bei der Drehung des Befestigungselementes 1 zur Einnahme der Verriegelungsposition mit dem Aufnahmeelement 6 zusammengedrückt wird.

Weiterhin ist es auch denkbar, daß das Befestigungselement 1 nicht mittels einer Drehbewegung in einer Verriegelungsposition gebracht wird, sondern eine Öffnung eines Aufnahmeelementes an einer bestimmten Stelle erweitert ist, so daß sich das Befestigungselement ohne Drehbewegung einschieben läßt. Die zutreffende Position des Befestigungselementes kann dann durch Verschieben des Befestigungselementes gegenüber dem Aufnahmeelement erreicht werden.

Hinsichtlich einer Schwingung- oder Schalldämpfung ist die Ausbildung der Teile 4, 5 des Befestigungselementes 1 als Metallgestrick-Kissen besonders günstig.

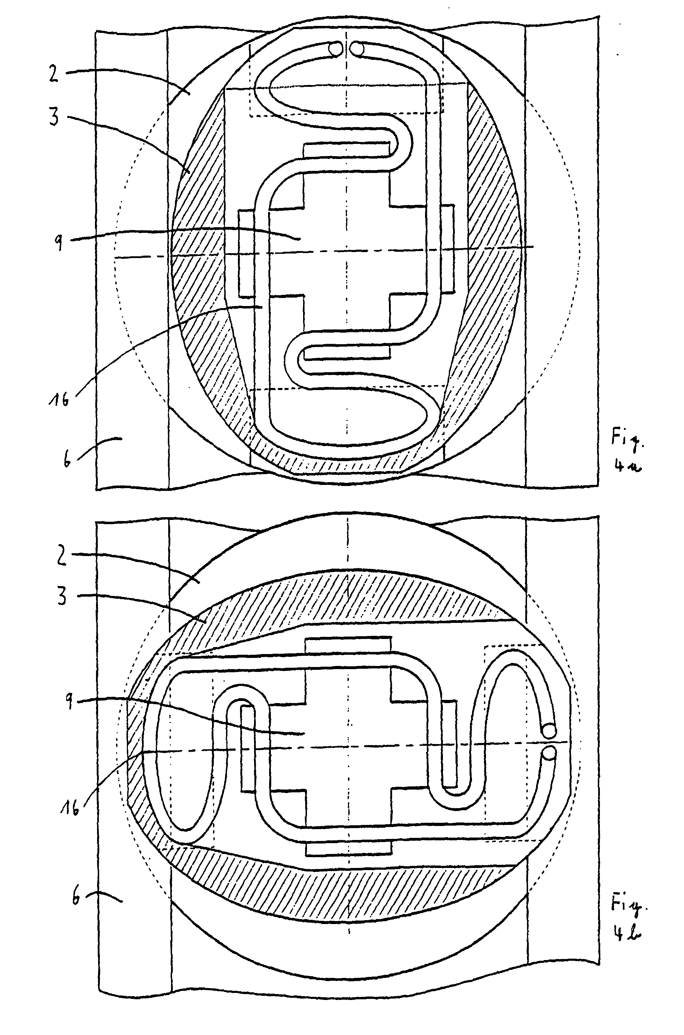

Das Verfahren zur Befestigung eines Fassadenelementes in einem Abstand an einer Basis beginnt mit dem Schritt a), das Tragelement 24 einer Stützeinrichtung an der Basis zu befestigen. Anschließend wird das Aufnahmeelement 6 mit der langgestreckten Öffnung 21 in einem Schritt b) relativ zu der Stützeinrichtung so positioniert, daß das zum Eingriff mit dem Aufnahmeelement mittels der Öffnung 21 ausgebildete Befestigungselement 1 der Stützeinrichtung in die Öffnung 21 des Aufnahmelementes 6 einschiebbar ist. Es folgt als Schritt c) das Einschieben des Befestigungselementes 1 in die Öffnung 21 des Aufnahmeelementes 6 zur Einnahme einer Einschiebeposition (Fig. 4a).

Danach wird in einem Schritt d) das Befestigungselement 1 so bewegt, so es mit dem Aufnahmeelement 6 in eine Verriegelungsposition kommt (Fig. 4b). Ein Verdrehen des Befestigungselementes um eine Achse senkrecht zur Ebene der Öffnung 21, so daß das Befestigungselement mit dem Aufnahmeelement in eine Verriegelungsposition kommt, ist besonders günstig.

Darauf folgt im Schritt e) Befestigen des Befestigungselementes 1 an dem Tragelement 24. Eine Befestigung zwischen dem Befestigungselement 1 und dem Tragelement 24 kann durch Einklemmen des Schaftes 28 des ankerförmigen Endes 25 des Tragelementes 24 zwischen eines der Federelementpaare 19, 20 des Befestigungselementes 1 bewerkstelligt werden, was zu einer sehr schnellen Verbindung führt, die auch leicht wieder lösbar ist, da sich die Federelemente eines Paares durch ein geeignetes Werkzeug leicht wieder spreizen lassen.

Das Verfahren endet mit dem Schritt f) Befestigen des Fassadenelementes an dem Aufnahmeelement 6, beispielsweise durch Verschrauben.

Alternativ dazu kann auch zur Befestigung eines Fassadenelementes eine Halteeinrichtung wie eine Gewindehülse vorgesehen sein, die an einem Befestigungselement angebracht oder mit diesem einstückig ist. In diesem Fall ist ein Aufnahmeelement mit entsprechenden Öffnungen auf der der langgestreckten Öffnung gegenüberliegenden Seite vorgesehen. Die Länge einer solchen Gewindehülse verhindert ein zu starkes Verpressen des Befestigungselementes und gewährleistet dadurch immer gleichbleibende schwingungstechnische Eigenschaften.

## Patentansprüche

1. Fassaden-Befestigungsvorrichtung zum Befestigen eines Fassadenelementes, mit
- einer Basis, insbesondere einer Außenwand eines Bauwerks, wobei das Fassadenelement im Abstand von der Basis an dieser befestigbar ist,
- mit einem Aufnahmeelement (6) zur Befestigung des Fassadenelementes
- und mit einer mit der Basis verbundenen Stützeinrichtung (1; 24) zur Befestigung des Aufnahmeelementes (6),
**dadurch gekennzeichnet, daß**
- das Aufnahmeelement (6) eine langgestreckte Öffnung (21) aufweist,
- und die Stützeinrichtung (1; 24) ein Befestigungselement (1) und ein Tragelement (24) umfaßt,
- wobei das Tragelement von der Basis vorstehend an dieser befestigt ist
- und wobei das Befestigungselement (1) Teile (4, 5) zum Eingriff mit dem Aufnahmeelement (6) mittels dessen langgestreckter Öffnung (21) und eine von außen zugängliche Federeinrichtung (16) zum Eingriff mit dem Tragelement (24) aufweist.

2. Befestigungsvorrichtung nach Anspruch 1, **dadurch gekennzeichnet, daß** die Federeinrichtung (16) mindestens ein Paar (19, 20) von im Abstand voneinander angeordneten Federelementen aufweist und ein Ende (25) des Tragelementes (24) als Anker ausgebildet ist, dessen Schaft (28) zwischen dem Federelementenpaar (19, 20) festklemmbar ist.

3. Befestigungsvorrichtung nach Anspruch 1 oder 2, **dadurch gekennzeichnet, daß** die Federeinrichtung (16) in einen schlitzförmigen Hohlraum (15) des Befestigungselementes (1) eingeschoben und mit diesem verrastet ist.

4. Befestigungsvorrichtung nach einem der Ansprüche 1 bis 3, **dadurch gekennzeichnet, daß** das Aufnahmeelement (6) als C-Profil ausgebildet ist und die Öffnung des C-Profils die langgestreckte Öffnung (21) bildet.

5. Befestigungsvorrichtung nach Anspruch 4, **dadurch gekennzeichnet, daß** das Befestigungselement (1) im C-Profil (6) so angeordnet ist, daß die Federeinrichtung (16) im wesentlichen in einer Ebene parallel zur Ebene der Öffnung (21), senkrecht zur Längsachse der Öffnung (21) und im Inneren des C-Profiles (6) angeordnet ist.

6. Befestigungsvorrichtung nach einem der Ansprüche 1 bis 5, **dadurch gekennzeichnet, daß** das Befestigungselement (1) der Stützeinrichtung (1; 24) am freien Ende der Stützeinrichtung (24) angeordnet und derart ausgebildet ist, daß es zur Einnahme einer ersten relativen Lage zum Aufnahmeelement (6) in dessen Öffnung (21) einschiebbar ist und ausgehend von der ersten relativen Lage in eine zweite relative Lage zum Aufnahmeelement (6) so bewegbar ist, daß es mit dem Aufnahmeelement (6) in eine Verriegelungsposition kommt.

7. Befestigungsvorrichtung nach Anspruch 6, **dadurch gekennzeichnet, daß** das Befestigungselement (1) einen Abschnitt (3) hat, dessen Querschnitt im wesentlichen in Form einer Ellipse ausgebildet ist, deren kleinere Halbachse kleiner und deren größere Halbachse größer als die halbe Breite der Öffnung (21) des Aufnahmeelementes (6) ist.

8. Befestigungsvorrichtung nach einem der Ansprüche 1 bis 7, **dadurch gekennzeichnet, daß** das Befestigungselement (1) aus hitzebeständigem Kunststoff als Grundmaterial hergestellt ist.

9. Befestigungsvorrichtung nach einem der Ansprüche 1 bis 8, **dadurch gekennzeichnet, daß** die mit dem Aufnahmeelement (6) in Eingriff kommenden Teile (4, 5) des Befestigungselementes (1) jeweils eine Nut (7, 8) aufweisen, deren Abmessungen zum Eingriff mit der Öffnung (21) des Aufnahmeelementes (6) angepaßt sind.

10. Befestigungsvorrichtung nach einem der Ansprüche 1 bis 9, **dadurch gekennzeichnet, daß** das Befestigungselement (1) der Stützeinrichtung (1; 24) schwingungsdämpfend ausgebildet ist.

11. Befestigungsvorrichtung nach einem der Ansprüche 1 bis 10, **dadurch gekennzeichnet, daß** die mit dem Aufnahmeelement in Eingriff kommenden Teile (4, 5) des Befestigungselementes (1) jeweils aus Metallgestrickkissen gebildec sind.

12. Befestigungsvorrichtung nach einem der Ansprüche 1 bis 10, **dadurch gekennzeichnet, daß** die mit dem Aufnahmeelement (6) in Eingriff kommenden Teile (4, 5) des Befestigungselementes (1) jeweils aus kompressiblem, federndem Material gebildet sind.

13. Befestigungsvorrichtung nach einem der Ansprüche 1 bis 10, **dadurch gekennzeichnet, daß** die mit dem Befestigungselement (1) in Eingriff kommenden Teile des Aufnahmeelementes jeweils aus kompressiblem, federndem Material gebildet sind.

14. Verfahren zur Befestigung eines Fassadenelementes in einem Abstand an einer Basis, umfassend die Schritte:
a) Befestigen eines Tragelementes (24) einer Stützeinrichtung (1; 24) an der Basis;
b) Positionieren eines Aufnahmeelementes (6) mit einer langgestreckten Öffnung (21) relativ zu der Stützeinrichtung (1; 24), so daß ein zum Eingriff mit dem Aufnahmeelement (6) mittels der Öffnung (21) ausgebildetes Befestigungselement (1) der Stützeinrichtung (1; 24) in die Öffnung (21) des Aufnahmeelementes (6) einschiebbar ist;
c) Einschieben des Befestigungselementes (1) in die Öffnung (21) des Aufnahmeelementes (6);
d) Bewegen des Befestigungselementes (1), so daß das Befestigungselement (1) mit dem Aufnahmeelement (6) in eine Verriegelungsposition kommt;
e) Befestigen des Befestigungselementes (1) an dem Tragelement (24) mittels einer am Befestigungselement (1) vorgesehenen, von außen zugänglichen Federeinrichtung (16), die mit dem Tragelement (24) in Eingriff kommt ; und
f) Befestigen des Fassadenelementes an dem Aufnahmeelement (6).

15. Verfahren nach Anspruch 14, **dadurch gekennzeichnet, daß** der Schritt e) ein Einklemmen eines Schaftes (28) eines ankerförmigen Endes (25) des Tragelementes (24) zwischen ein Federelementenpaar (19, 20) des Befestigungselementes (1) umfaßt.

16. Verfahren nach einem der Ansprüche 14 oder 15, **dadurch gekennzeichnet, daß** der Schritt b) ein Verdrehen des Befestigungselementes (1) um eine Achse senkrecht zur Ebene der Öffnung (21), so daß das Befestigungselement (1) mit dem Aufnahmeelement (6) in eine Verriegelungsposition kommt, umfaßt.

## Claims

1. A façade attachment apparatus for attaching a cladding panel, having:
- a base, in particular an outer wall of a building, wherein the cladding panel can be attached to, and spaced from, the base,
- a receiving element (6) for attaching the cladding panel, and
- a supporting device (1; 24) connected to the base for attaching the receiving element (6),
**characterized in that**
- the receiving element (6) has an elongate opening (21), and
- the supporting device (1; 24) comprises an attachment element (1) and a carrying element (24), wherein
- the carrying element is attached to the base protruding from it, and
- the attachment element (1) has parts (4, 5) for engaging the receiving element (6) by means of its elongate opening (21), and a spring device (16) accessible from the outside for engaging the carrying element (24).

2. The attachment apparatus according to claim 1, **characterized in that** the spring device (16) has at least one pair (19, 20) of spaced spring elements, and one end (25) of the carrying element (24) is formed as an anchor, whose shank (28) may be wedged between the pair of spring elements (19, 20).

3. The attachment apparatus according to claim 1 or 2, **characterized in that** the spring device (16) is inserted in, and locked with, a slot-shaped cavity (15) of the attachment element (1).

4. The attachment apparatus according to any of claims 1 to 3, **characterized in that** the receiving element (6) is shaped as a C-section and the opening of the C-section forms the elongate opening (21).

5. The attachment apparatus according to claim 4, **characterized in that** the attachment element (1) is arranged in the C-section (6) such that the spring device (16) is arranged essentially in a plane parallel to the plane of the opening (21), normal to the longitudinal axis of the opening (21) and within the C-section (6).

6. The attachment apparatus according to any of claims 1 to 5, **characterized in that** the attachment element (1) of the supporting device (1; 24) is arranged at the free end of the supporting device (24) and formed in such a way that for taking a first relative position with respect to the receiving element (6) it is insertable in the opening (21) thereof and can be moved starting from the first relative position into a second relative position with respect to the receiving element (6) in such a way that it comes into a locking position with respect to the receiving element (6).

7. The attachment apparatus according to claim 6, **characterized in that** the attachment element (1) has a portion (3) having a cross-section essentially in the form of an ellipse, having a smaller semiaxis smaller than, and a greater semiaxis greater than, half of the width of the opening (21) of the receiving element (6).

8. The attachment apparatus according to any of claims 1 to 7, **characterized in that** the attachment element (1) is manufactured of a heat resistant plastics material as a base material.

9. The attachment apparatus according to any of claims 1 to 8, **characterized in that** the parts (4, 5) of the attachment element (1) coming into engagement with the receiving element (6) each have a groove (7, 8) having dimensions adapted to engage the opening (21) of the receiving element (6).

10. The attachment apparatus according to any of claims 1 to 9, **characterized in that** the attachment element (1) of the supporting device (1; 24) is adapted to reduce vibrations.

11. The attachment apparatus according to any of claims 1 to 10, **characterized in that** the parts (4, 5) of the attachment element (1) coming into engagement with the receiving element are each made of braided metal pads.

12. The attachment apparatus according to any of claims 1 to 10, **characterized in that** the parts (4, 5) of the attachment element (1) coming into engagement with the receiving element (6) are each made of compressible resilient material.

13. The attachment apparatus according to any of claims 1 to 10, **characterized in that** the parts of the receiving element coming into engagement with the attachment element (1) are each made of compressible resilient material.

14. A method for attaching a cladding panel on, and spaced from, a base, comprising the steps of:
a) attaching a carrying element (24) of a supporting device (1; 24) on the base;
b) positioning a receiving element (6) having an elongate opening (21) relative to the supporting device (1; 24) so that an attachment element (1) of the supporting device (1; 24) adapted to engage the receiving element (6) by means of the opening (21) can be inserted into the opening (21) of the receiving element (6);
c) inserting the attachment element (1) into the opening (21) of the receiving element (6);
d) moving the attachment element (1) so that the attachment element (1) comes into a locking position with respect to the receiving element (6);
e) attaching the attachment element (1) on the carrying element (24) by means of a spring element (16) provided on the attachment element (1) and accessible from the outside, engaging the carrying element (24); and
f) attaching the cladding panel on the receiving element (6).

15. The method according to claim 14, **characterized in that** step e) comprises wedging a shank (28) of an anchor-shaped end (25) of the carrying element (24) between a pair of spring elements (19, 20) of the attachment element (1).

16. The method according to any of claims 14 or 15, **characterized in that** step b) comprises rotating the attachment element (1) around an axis normal to the plane of the opening (21) so that the attachment element (1) comes into a locking position with respect to the receiving element (6).

## Revendications

1. Dispositif de fixation de façade pour fixer un élément de façade avec
- une base, en particulier une paroi extérieure d'un bâtiment, l'élément de façade pouvant être fixé sur celle-ci à un écart de la base,
- avec un élément de réception (6) pour la fixation de l'élément de façade
- et avec un dispositif d'appui (1 ; 24) relié à la base pour la fixation de l'élément de réception (6),
**caractérisé en ce que**
- l'élément de réception (6) présente une ouverture étirée en longueur (21),
- et le dispositif d'appui (1 ; 24) comprend un élément de fixation (1) et un élément porteur (24),
- l'élément porteur étant fixé à la base en faisant saillie de celle-ci
- et l'élément de fixation (1) présentant des parties (4, 5) pour l'engrènement avec l'élément de réception (6) au moyen de son ouverture étirée en longueur (21) et un dispositif à ressort (16) accessible de l'extérieur pour l'engrènement avec l'élément porteur (24).

2. Dispositif de fixation selon la revendication 1, **caractérisé en ce que** le dispositif à ressort (16) présente au moins une paire (19, 20) d'éléments à ressort placés à un écart l'un de l'autre et une extrémité (25) de l'élément porteur (24) est configurée comme tirant dont la tige (28) peut être coïncée entre la paire d'éléments à ressort (19, 20).

3. Dispositif de fixation selon la revendication 1 ou 2, **caractérisé en ce que** le dispositif à ressort (16) est inséré dans un espace creux en forme de fente (15) de l'élément de fixation (1) et est encliqueté avec celui-ci.

4. Dispositif de fixation selon l'une des revendications 1 à 3, **caractérisé en ce que** l'élément de réception (6) est configuré comme profil en C et l'ouverture du profil en C forme l'ouverture étirée en longueur (21).

5. Dispositif de fixation selon la revendication 4, **caractérisé en ce que** l'élément de fixation (1) est placé dans le profil en C (6) de telle manière que le dispositif à ressort (16) est placé substantiellement dans un plan parallèlement au plan de l'ouverture (21), perpendiculairement à l'axe longitudinal de l'ouverture (21) et dans l'intérieur du profil en C (6).

6. Dispositif de fixation selon l'une des revendications 1 à 5, **caractérisé en ce que** l'élément de fixation (1) du dispositif d'appui (1 ; 24) est placé à l'extrémité libre du dispositif d'appui (24) et est configuré de manière telle qu'il peut être inséré pour prendre une première position relative par rapport à l'élément de réception (6) dans l'ouverture (21) de celui-ci et qu'il peut être déplacé, en partant de la première position relative, dans une seconde position relative par rapport à l'élément de réception (6) de telle manière qu'il vient dans une position de verrouillage avec l'élément de réception (6).

7. Dispositif de fixation selon la revendication 6, **caractérisé en ce que** l'élément de fixation (1) a une portion (3) dont la section transversale est configurée substantiellement en forme d'ellipse dont le demi-axe plus petit est plus petit et dont le demi-axe plus grand est plus grand que la demie largeur de l'ouverture (21) de l'élément de réception (6).

8. Dispositif de fixation selon l'une des revendications 1 à 7, **caractérisé en ce que** l'élément de fixation (1) est fabriqué en un plastique résistant à la chaleur comme matériau de base.

9. Dispositif de fixation selon l'une des revendications 1 à 8, **caractérisé en ce que** les parties (4, 5) de l'élément de fixation (1) qui viennent s'engrener avec l'élément de réception (6) présentent respectivement une gorge (7, 8) dont les dimensions sont adaptées pour l'engrènement avec l'ouverture (21) de l'élément de réception (6).

10. Dispositif de fixation selon l'une des revendications 1 à 9, **caractérisé en ce que** l'élément de fixation (1) du dispositif d'appui (1 ; 24) est configuré en étant amortisseur de vibrations.

11. Dispositif de fixation selon l'une des revendications 1 à 10, **caractérisé en ce que** les parties (4, 5) de l'élément de fixation (1) qui viennent s'engrener avec l'élément de réception sont configurées respectivement en coussin de tricot métallique.

12. Dispositif de fixation selon l'une des revendications 1 à 10, **caractérisé en ce que** les parties (4, 5) de l'élément de fixation (1) qui viennent s'engrener avec l'élément de réception (6) sont formées respectivement en matériau compressible élastique.

13. Dispositif de fixation selon l'une des revendications 1 à 10, **caractérisé en ce que** les parties de l'élément de réception qui viennent s'engrener avec l'élément de fixation (1) sont formées respectivement en matériau compressible élastique.

14. Procédé de fixation d'un élément de façade à un écart sur une base, comprenant les étapes :
a) fixation d'un élément porteur (24) d'un dispositif d'appui (1 ; 24) à une base ;
b) positionnement d'un élément de réception (6) avec une ouverture étirée en longueur (21) par rapport au dispositif d'appui (1 ; 24) si bien qu'un élément de fixation (1) du dispositif d'appui (1 ; 24) configuré pour l'engrènement avec l'élément de réception (6) au moyen de l'ouverture (21) peut être inséré dans l'ouverture (21) de l'élément de réception (6);
c) insertion de l'élément de fixation (1) dans l'ouverture (21) de l'élément de réception (6) ;
d) déplacement de l'élément de fixation (1) si bien que l'élément de fixation (1) vient dans une position de verrouillage avec l'élément de réception (6) ;
e) fixation de l'élément de fixation (1) à l'élément porteur (24) au moyen d'un dispositif à ressort (16), accessible de l'extérieur, prévu sur l'élément de fixation (1), dispositif qui vient s'engrener avec l'élément porteur (24) et
f) fixation de l'élément de façade à l'élément de réception (6).

15. Procédé selon la revendication 14, **caractérisé en ce que** l'étape e) comprend un coïncement d'une tige (28) d'une extrémité en forme de tirant (25) de l'élément porteur (24) entre une paire d'éléments à ressort (19, 20) de l'élément de fixation (1).

16. Procédé selon l'une des revendications 14 ou 15, **caractérisé en ce que** l'étape b) comprend une torsion de l'élément de fixation (1) autour d'un axe perpendiculaire au plan de l'ouverture (21) si bien que l'élément de fixation (1) vient dans une position de verrouillage avec l'élément de réception (6).
